# EUROPÄISCHE PATENTSCHRIFT

(11) **EP 2 902 173 B1**
(45) Veröffentlichungstag und Bekanntmachung des Hinweises auf die Patenterteilung: **18.04.2018**
(21) Anmeldenummer: 15000180.8
(22) Anmeldetag: 22.01.2015
(51) Int. Cl.: B29C 65/60, B60R 21/16, B29C 65/10, B29C 65/18, B29C 65/00, B29L 22/02, B29L 31/30, B60R 21/20, G01L 1/04

(54) **Verfahren zum Nieten, Nietanlage und Airbagbauteil**
Method for riveting, riveting installation and airbag component
Procédé de rivetage, installation de rivetage et composant d'airbag

(30) Priorität: 03.02.2014 DE 102014001239
(43) Veröffentlichungstag der Anmeldung: 05.08.2015
(73) Patentinhaber: KIEFEL GmbH, 83395 Freilassing (DE)
(72) Erfinder: Eder, Josef, DE - 83395 Freilassing (DE); Lorenz, Michael, AT - 5020 Salzburg (AT); Dandl, Andreas, DE - 83410 Laufen (DE)
(74) Vertreter: Farago-Schauer, Peter Andreas

(56) Entgegenhaltungen:
- EP-A1- 0 421 019
- EP-A2- 1 600 280
- JP-A- 2003 300 252
- JP-A- 2008 168 538

## Beschreibung

Die Erfindung betrifft ein Verfahren zum Nieten, eine Nietanlage und ein Airbagbauteil.

Kunststoff-Niete werden im hier vornehmlich relevanten Automobil-Bereich seit langer Zeit umfangreich eingesetzt: Beim Nieten wird ein Annietteil an einem Bauteil angebracht. Dazu befindet sich am Bauteil ein plastisch verformbarer Kunststoff-Niet, wobei der Kunststoff-Niet in seiner einfachsten Form zylindrisch ist und vom Bauteil absteht, im Idealfall rechtwinklig, und dabei bevorzugt dennoch einstückig mit dem Bauteil oder einem dort angebrachten Kunststoff-Teil ausgeführt ist.

Zum Befestigen des Annietteils wird dieses mit einer Öffnung oder einer Kante unter einen Kopfbereich des Niets geführt. Der Niet wird anschließend beginnend von seinem Kopfbereich, also seinem freien Ende, mittels eines Nietstempels plastisch verformt, beispielsweise an seinem Kopfende pilzförmig flachgepresst. Durch die Verformung des Nietstempels wird das Annietteil am Bauteil fixiert.

Ein sehr bewährtes Nietverfahren ist in der DE 100 38 158 B4 offenbart: Der Nietstempel ist dort in einer Strömungsführungshülse angeordnet. In der Ausgangsposition befindet sich die Hülse mit dem Nietstempel oberhalb des Niets, der durch eine Aussparung im Annietteil ragt. Zunächst wird die Hülse um den Niet gesetzt, und es wird ein erwärmter Luftstrom zum Vorwärmen durch die Hülse hindurch und um den Niet gelenkt. Der auf diese Weise vorgewärmte Niet wird anschließend mit einem beheizten Nietstempel verformt. Die Heizpatrone im Nietstempel wird sodann abgeschaltet, und ein starker Kühlerluftstrom wird durch die Hülse geführt, so dass der Nietstempel und der Niet gekühlt werden. Nach dem Abkühlen fährt der Nietstempel mit der Hülse nach oben. Erst dann wird der Niederhalter, im Idealfall also gleichzeitig von der Hülse verkörpert, von den miteinander zu vernietenden Bauteilen abgehoben. Aus der EP 1 600 280 ist ein Verfahren zum Nieten und eine Nietanlage gemäß dem Oberbegriff der Ansprüche 1 und 15 bekannt. Die JP 2003 300252 beschreibt ein Airbagbauteil gemäß dem Oberbegriff des Anspruchs 16. Weitere Verfahren und Vorrichtungen zum Nieten sind in der EP 0 421 019 und der JP 2008 168538 beschrieben.

Der Erfindung liegt die Aufgabe zugrunde, dem Stand der Technik eine Verbesserung oder eine Alternative zur Verfügung zu stellen.

Nach einem ersten Aspekt der Erfindung löst diese Aufgabe ein Verfahren zum Nieten mit Hilfe eines plastisch verformbaren Kunststoff-Niets gemäß dem unabhängigen Anspruch 1. Begrifflich sei folgendes erläutert:
Ausdrücklich sei darauf hingewiesen, dass im Rahmen der hier vorliegenden Patentanmeldung unbestimmte Artikel und Zahlenangaben wie "ein", "zwei" usw. regelmäßig als mindestens-Angaben verstanden sein sollen, also als "mindestens ein...", "mindestens zwei..." usw., soweit sich nicht etwa aus dem jeweiligen Kontext unmittelbar oder mittelbar ergibt oder es für den Fachmann offensichtlich ist, dass dort nur "genau ein ...", "genau zwei..." usw. gemeint ist oder sein kann.

Das "Bauteil eines Kraftfahrzeugs", welches hier für den hauptsächlichen Einsatzzweck der Erfindung gattungsgegenständlich ist, kann sowohl ein technisches als auch ein dekoratives Bauteil sein. Es kann sich insbesondere um eine Innenverkleidung eines Kraftfahrzeugs handeln, vor allem ein kaschiertes Bauteil, insbesondere mit einer Kaschierung mit einer Ledernarbung; eine besondere Ausführung der Erfindung sieht vor, dass an ein sicherheitsrelevantes Bauteil auf diese Weise genietet wird, vor allem an ein Bauteil mit einem sich darin oder darunter verbergenden Airbag.

Der "Nietstempel" ist dasjenige Teil am Werkzeug, welches dazu eingerichtet ist, die Verformung des Niets durch direkten physischen Kontakt vorzunehmen, konkret durch ein Hereinfahren des Nietstempels in den hervorstehenden Niet, wodurch der Niet zwangsverformt wird.

Das Messen der Nietkraft soll durch den "Nietkraftmesser" erfolgen. Darunter ist zu verstehen, dass mindestens eine Kraft in mindestens einer Raumrichtung während des Nietvorgangs gemessen wird.

Es kann beispielsweise die Maximalkraft gemessen werden, die während des Nietvorgangs auftritt. Vor dem Kontakt des Nietstempels mit dem Niet und nach dem Abheben des Nietstempels vom verformten Niet hat der Nietstempel keinerlei Kraft, abgesehen von der Kraft, die auf ihn aus seiner eigenen Schwerkraft wirkt. Vom Beginn der Berührung zwischen dem Nietstempel und dem zu verformenden Niet bis zum Entfernen des Nietstempels vom verformten Niet liegt eine Nietkraft an. Es ist beispielsweise denkbar, das Maximum der Nietkraft über diesen Zeitraum als die "Nietkraft" zu messen.

Eine Alternative oder kumulative Lösung sieht vor, über einen Zeitraum während des Nietvorgangs mehrere diskrete Werte oder sogar eine dauerhafte Messung zu ermitteln.

Während die Maximalwerte besonders über eine etwaige Materialgefährdung Aufschluss geben können, kann über die Kontrolle der Kräfte während des Verfahrens gezielt auf die innermolekulare Qualität des verformten Niets Einfluss genommen werden.

So ist im Stand der Technik beispielsweise die Gefahr bekannt, dass ein Niet wegen zu hoher Nietkräfte entweder abbricht oder beispielsweise auf der sogenannten Gutseite des Bauteils eine Durchformung zu erkennen ist. Da die für Kraftfahrzeuge bestimmten Bauteile zum Zeitpunkt des Nietens meist schon einen recht hohen Wert haben, lässt die hier vorgestellte Erfindung die Möglichkeit zu, solche Schäden mit größter Sicherheit zu vermeiden. Erfindungsgemäß sind eine Vielzahl Nietstempel an einem Werkzeug angeordnet, und die Nietkraft von zumindest zwei Nietstempeln, bevorzugt von allen Nietstempeln, wird individuell gemessen.

Werkzeuge zum Vernieten setzen im Allgemeinen an mehreren Stellen Nietpunkte, beispielsweise zum Verbinden von der Innenverkleidung eines Kraftfahrzeugteils zu einer dahinter liegenden flächigen ebenfalls aus Kunststoff oder aus Blech bestehenden Konstruktion. Gerade bei zwei eher flächigen Teilen, die verbunden werden sollen, wird meist eine Reihe von Nieten im Wesentlichen entlang des Umfangs der flächigen Teile gesetzt.

Durch das individuelle Messen der Nietkräfte ist es möglich, den Nieten individuelle Eigenschaften zu verleihen, so kann beispielsweise ein Niet, der von hinten an eine empfindliche Stelle der Gutseite gesetzt wird, aber keine Sicherheitsfunktion hat, mit geringerer Nietkraft angebracht werden und verformt werden, wohingegen Verbindungen entweder hinter weniger empfindlichen Bereichen der Gutseite oder mit mechanischer Bedeutung mit höherer Nietkraft verbunden werden können.

Gezielt mit Blick auf sicherheitsrelevante Bauteile ist vorstellbar, dass mit dem Verfahren ein Niet mit einer Sollbruchstelle gesetzt wird.

Eine "Sollbruchstelle" ist eine strukturelle Schwächung der Verbindung zwischen dem Bauteil und dem Annietteil, bevorzugt hervorgerufen durch eine strukturelle Schwächung im Niet selbst, beispielsweise im Querschnitt des Niets. Auch kann eine Sollbruchstelle dadurch erzielt werden, dass mit einer bestimmten Nietkraft genietet wird, welche beispielsweise entweder nur eine geringe Verformung des Niets hervorruft, so dass das Annietteil nur eine geringe Rückverformung des verformten Niets bewirken muss, um sich vom Bauteil zu lösen; oder der Niet wird mit einer besonders großen Annietkraft verformt, so dass bei einer ablösenden Kraft des Annietteils auf den verformten Niet dieser leicht zum Brechen neigt; oder es wird mit einer besonders schnellen oder besonders langsamen Verformung ein eher sprödes Werkstoffverhalten des verformten Niets hervorgerufen, so dass dieser bei Aufbringen einer Scher- oder Zugkraft zerstört wird.

Unabhängig davon, ob eine Sollbruchstelle vorhanden ist oder nicht, kann die Nietkraft protokolliert werden. Dies ermöglicht beispielsweise eine Qualitätssicherung für den gesetzten Niet, vor allem bei einer Vielzahl von Nieten an der Verbindung.

Der Niet kann beispielsweise eine zum Aufplatzen vorgesehen Naht in einem Kraftfahrzeug schließen, insbesondere eine Airbagnaht. Für eine solche Naht ist es von besonderer Bedeutung, dass der Niet beziehungsweise die Mehrzahl Niete bei Aufbringen einer im Voraus definierte Kraft nachgibt, damit beispielsweise ein auslösender Airbag sicher die Naht aufreißen und aus dem Innenverkleidungsteil oder Außenverkleidungsteil des Kraftfahrzeugs zum Schutz des Insassen oder Passagiers austreten kann.

Es wurde bereits darauf hingewiesen, dass die Kraftfahrzeugteile beim Vernieten meist schon einen recht hohen Vorverarbeitungsgrad und somit recht hohen Wert aufweisen. Besonders leicht ist dies erkennbar, wenn beispielsweise schon eine Kaschierung vorliegt oder ein weiteres Teil eingesetzt ist, beispielsweise ein Lautsprechergitter, ein Lautsprecher, ein Türgriff, ein Leuchtmittel, eine Klappe, ein Fach und/oder ein Bedienknopf.

Bei Prototypenversuchen der Erfinder gezielt an Bauteilen für Kraftfahrzeuge haben sich vor allem Nietkräfte von weniger als 500 N als vorteilhaft herausgestellt, insbesondere von weniger als 300 N, bevorzugt von etwa 200 N.

Wenn eine maximal zulässige Nietkraft definiert wird, dann wird vorgeschlagen, dass protokolliert wird und zwar bevorzugt automatisch, dass eine maximal zulässige Nietkraft nicht überschritten worden ist.

Eine "maximal zulässige Nietkraft" wird vor allem auf solche Weise im Verfahren einsetzbar sein, dass das Verfahren auf einen Controller am Werkzeug oder an einer das Werkzeug tragenden Werkzeugstation oder Anlage zugreift, wobei der Controller seinerseits Zugriff auf einen Datenspeicher aufweist, und wobei im Datenspeicher die zulässige Maximalkraft entweder pauschal für alle Niete oder individuell für eine oder mehrere Niete eingespeichert ist. Die Kraft kann entweder anlagenseitig vorgesehen sein oder sie kann beispielsweise vom Benutzer ermittelt oder direkt eingegeben werden.

Das Protokollieren, das die maximal zulässige Nietkraft nicht überschritten worden ist, kann vor allem für sicherheitsrelevante Bauteile von hoher Bedeutung sein. So kann ein Kraftfahrzeughersteller oder ein Kraftfahrzeugzulieferer auf diese Weise sicherstellen, dass die sicherheitsrelevanten Bauteile, vor allem Bauteile mit aufplatzenden Nähten für Airbags, im Ernstfall auch tatsächlich die Funktion des Airbags zulassen.

Bevorzugt ist vorgesehen, dass der Nietvorgang unterbrochen wird, wenn eine maximal zulässige Nietkraft überschritten worden ist.

Das "Unterbrechen" kann entweder darin bestehen, dass der Stempel angehalten und nicht weiter in den Niet hineingefahren wird, so dass der Niet zwar im verformten Zustand gesetzt bleibt, das Bauteil aber dennoch normalerweise verwendet werden kann. Es kann beispielsweise einer optischen oder gerätegestützten Einzeluntersuchung zugeführt werden; eine Alternative kann vorsehen, dass Teile, bei welchen die maximal zulässige Nietkraft überschritten worden ist, automatisch dem Ausschuss zugeführt werden.

Es wurde bereits erläutert, dass die maximal zulässige Nietkraft zum Setzen des Niets individuell sein kann, beispielsweise von Niet zu Niet, oder von Kunststoffcharge zu Kunststoffcharge. Auch die Hallentemperatur kann beispielsweise zu einer Veränderlichkeit der maximal zulässigen Nietkraft beitragen.

Es wird daher als vorteilhaft erachtet, wenn in einem vorausgehenden Schritt die maximal zulässige Nietkraft für das Setzen des Niets erst ermittelt wird, beispielsweise durch optische Begutachtung von Testnietvorgängen, wobei vor allem eine Reihe von Testnietvorgängen durchgeführt werden können, und wobei die aufgewendeten Nietkräfte bei den Testnietvorgängen beispielsweise in maschinell vorgegebenen Schritten durchgeführt werden können oder manuell eingestellt werden können.

So lässt sich die optische Beeinträchtigung der Gutseite des Bauteils durch ein einfaches Betrachten eines erfahrenen Benutzers durchführen. Wenn der Benutzer bei etwaigen Durchdrückungen auf die Gutseite die maximal zulässige Nietkraft für diesen einen Niet oder für eine Schar Niete oder für das Nietwerkzeug insgesamt herabsetzen kann, kann sichergestellt werden, dass Durchdrückungen auf die Gutseite nicht erscheinen.

Für sicherheitsrelevante Teile mit Sollbruchstellen macht es Sinn, die maximal zulässige Nietkraft niedriger anzusetzen als bei übrigen Nieten am selben Werkzeug.

Die wohl wichtigste Nietkraft ist die Kraft in Längsrichtung des Nietstempels, also jedenfalls entlang derjenigen Raumrichtung, entlang welcher der Nietstempel in den zu verformenden Niet hineinbewegt wird. Dieser entspricht in einer bevorzugten Ausführungsform des Nietstempels der Längserstreckungsrichtung des Nietstempels selbst, wie beispielsweise in der DE 100 38 158 B4.

Die Kraft entlang der Vernietungsrichtung, also der Bewegungsrichtung des Nietstempels in den zu verformenden Niet hinein, ist diejenige Kraft, welche am stärksten für die Verformung des Niets sorgt und deshalb die größte Beachtung verdient.

Die Nietkraft kann besonders leicht an einem Halter des Nietstempels am Werkzeug gemessen werden.

Um bei einem Werkzeug mit mehreren Nietstempeln eine individuelle Einstellung der Nietkraft zu erzielen, kann es vorgesehen sein, dass die einzelnen Nietstempel entlang ihrer Längsachse verstellt und in der verstellten Position neu fixiert werden, so dass bei einer identischen Bewegung des Werkezugs im Übrigen die Nietkraft an dem verstellten Stempel entweder steigt, wenn der Nietstempel weiter in Angriffsrichtung verstellt worden ist, oder sinkt, wenn der Nietstempel gegen die Angriffsrichtung verstellt worden ist.

Es wurde bereits darauf hingewiesen, dass es sinnvoll sein kann, verschiedene maximal zulässige Nietkräfte für verschiedene Nietstempel an einem Nietwerkzeug zuzulassen, beispielsweise zum Setzen verschiedenartig geformter Niete und/oder zum Setzen von Nieten in verschieden Werkstoffe am Bauteil und/oder verschiedenen Funktionen am Bauteil.

Bevorzugt wird das Verfahren wie vorstehend beschrieben an einem solchen Verfahren eingesetzt, welches in der DE 100 38 158 B4 vorgeschlagen und geschützt ist, wobei der gesamte dortige Offenbarungsgehalt im Wege der Referenzierung hier ebenfalls als mitoffenbart verstanden werden soll. Ferner offenbart ist ein Nietwerkzeug mit einem Nietstempel für einen plastisch verformbaren Kunststoff-Niet, insbesondere eingerichtet zum Durchführen eines Verfahrens wie vorstehend beschrieben, wobei das Nietwerkzeug einen Nietkraftmesser zum Messen einer insbesondere axialen Nietkraft beim Nieten aufweist.

Als das "Nietwerkzeug" kann in einer engeren Betrachtung der Nietstempel mit seinem Halter und beispielsweise einer Hülse verstanden werden, also ein solches Bauteil, welches mehrfach in einer Anlage an einem Sammelwerkezug eingesetzt wird; oder es kann das Sammelwerkzeug darunter verstanden werden, also ein beispielsweise eher flächiges Werkzeug, welches eine Vielzahl von Nieteinheiten mit Nietstempeln trägt.

Der "Nietkraftmesser" kann beispielsweise ein Federkraftmesser sein, oder in einer einfachen und vor allem auch leicht nachrüstbaren Form kann ein Dehnungsmessstreifen angeordnet sein. Generell ist es eine technisch zuverlässige Ausführungsform, wenn der Nietkraftmesser eine Verformung einer Messeinheit erfasst und ein Controller mit dem Nietkraftmesser datenverbunden ist, beispielsweise über eine Stromverbindung, wobei beispielsweise ein geänderter elektrischer Widerstand gemessen wird.

Bevorzugt ist eine Datenleitung zwischen dem Nietkraftmesser und dem Controller vorgesehen, vor allem in Form eines elektrischen Kabels.

Nach einem zweiten Aspekt der Erfindung wird eine Nietanlage gemäß dem unabhängigen Anspruch 15 vorgeschlagen, welche zum Durchführen eines Verfahrens wie vorstehend beschrieben eingerichtet ist und/oder welche ein Nietwerkzeug wie vorstehend beschrieben aufweist. Eine solche Nietanlage kann vor allem hydraulisch oder pneumatisch betätigte Teile aufweisen, wie beispielsweise Halteeinrichtungen für das Bauteil und/oder das Annietteil, und/oder es können Transportmittel vorgesehen sein, zum Bewegen von Bauteil und/oder Annietteil.

Es versteht sich, dass sich die vorgestellten Vorteile eines Nietverfahrens vor allem auf ein Airbagbauteil unmittelbar auswirken, wenn das Airbagbauteil eine Mehrzahl Kunststoff-Niete aufweist, wobei die Kunststoff-Niete mit unterschiedlichen Nietkräften verformt sind

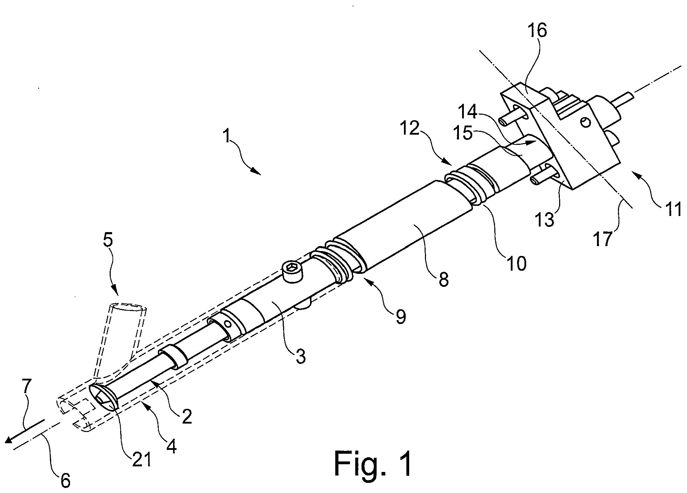

Die Erfindung wird nachstehend anhand eines Ausführungsbeispiels unter Bezugnahme auf die Zeichnung näher erläutert. Dort zeigen
- Figur 1: schematisch in einer halb-transparenten Darstellung eine räumliche Ansicht einer Nieteinheit mit einem Halter,
- Figur 2: schematisch in einer abgewandelten Darstellung eine räumliche Ansicht als Detail auf den Halter aus einer anderen Perspektive sowie
- Figur 3: schematisch in einem Längsschnitt die Nieteinheit mit dem Halter.

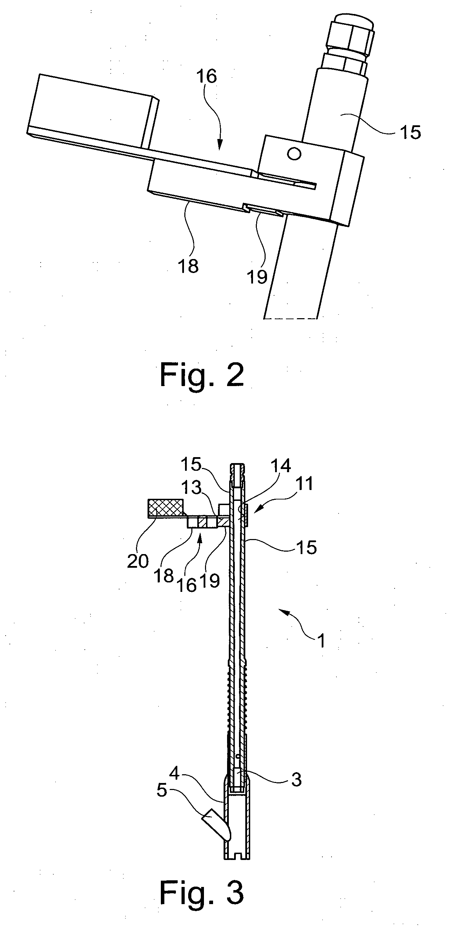

Die Nieteinheit 1 in den Figuren besteht im Wesentlichen aus dem Nietstempel 2 (in Figur 3 nicht mit dargestellt), der an einer Nietstempelaufnahme 3 getragen ist, wobei um den Nietstempel 2 herum in vorteilhafter Anwendung der Offenbarung aus der DE 100 38 158 B4 eine Luftführungshülse 4 angeordnet ist, welche gleichzeitig als Niederhalter während des Nietens dient.

Die Luftführungshülse 4 weist einen Anschlussstutzen 5 zum Zuführen von Kühlluft zum Nietstempel 2 auf.

Die Nieteinheit 1 ist entlang einer Längserstreckungsrichtung 6 gestreckt aufgebaut und im Wesentlichen zylindrisch.

Entlang der Längserstreckungsrichtung 6 befindet sich mehr in Angriffsrichtung 7, also am in der Praxis meist unteren Ende der Nieteinheit 1, der Nietstempel 2 mit seiner Luftführungshülse 4.

Entgegen der Angriffsrichtung 7 findet der zylindrische Körper Fortsetzung in einem Federelement 8, welches mit einer ersten Spiralfeder 9 und einer zweiten Spiralfeder 10 in der Längserstreckungsrichtung 6 der Nieteinheit 1 federnd ausgestaltet ist, so dass sich die Nietstempelaufnahme 3 mit dem daran befestigten Nietstempel 2 sowie die ebenfalls befestigte Luftführungshülse 4 axial unter Aufbau beziehungsweise Abbau einer linearen Federkraft auf den Halter 11 hinzu und von diese Fortbewegen können.

Zwischen dem Federelement 8 und dem Halter 11 befindet sich ein Schraubring 12, welcher in der Funktion einer Spindel die Nieteinheit 1 axial verlängern oder verkürzen kann, so dass bei einer einmal gegebenen Einbausituation des Halters 11 an einem Werkzeug in einer Nietstation (nicht dargestellt) größere oder kleinere Nietkräfte einstellen.

Der Halter 11 besteht im Wesentlichen aus einem Halteflansch 13, mit einerseits einer zylindrischen Aufnahme 14 für den zylindrischen Körper 15, welcher sich sodann in Angriffsrichtung 7 in das Federelement 8 und letztlich hin zum Nietstempel 2 fortsetzt; andererseits verfügt der Halteflansch 13 über eine Auskragung 16 zur Anordnung am Werkzeugträger.

In der hier gewählten Ausführungsform ist die Auskragung 16 bei Aufbringen einer Längskraft entlang der Angriffsrichtung 7, in der Praxis als Druckkraft entgegen der Angriffsrichtung 7, anfällig, sich um eine Biegeachse 17 zu biegen. Dies führt dazu, dass bei Aufbringen einer Nietkraft an einer Unterseite 18 der Auskragung 16 eine Materialdehnung stattfindet. Ein dort angeordneter Dehnungsmessstreifen 19 registriert die Streckung an der Unterseite 18 der Auskragung 16 und ist datenverbunden mit einem ebenfalls an der Nieteinheit 1 angebrachten Verstärker 20.

Im Einsatz der Nieteinheit 1 fährt der Werkzeugträger mit einer Vielzahl Nieteinheiten 1 entlang der Angriffsrichtung 7 gegen die Niete eines Bauteils und setzt damit die Nietstempel 2 auf die Niete. Durch das weitere Vorwärtsfahren des Werkzeugträgers in Angriffsrichtung 7 werden die Nietstempel 2 in die Niete hineingefahren, wodurch sich die Niete verformen. Ein Flachbiegeteller 21 sorgt dabei dafür, dass das plastisch verformt werdende Material des Kunststoff-Niets flach auf die Außenseite der beiden miteinander verbundenen Bauteile gelegt wird, also auf diejenige Seite des Annietteils, welche vom Bauteil entfernt liegt.

Während des Verformens wird die axial gegen die Angriffsrichtung 7 wirkende Druckkraft in der Nieteinheit 1 über die Verformung am Dehnungsmessstreifen 19 ermittelt, in dem die vom Dehnungsmessstreifen 19 übertragenden Daten am Verstärker 20 vorverstärkt und anschließend einem Controller (nicht dargestellt) an der Werkzeugstation zugeleitet werden.

Es können anschließend eine Protokollierung und/oder eine geänderte Einstellung der Nietkräfte erfolgen.

Es sei ausdrücklich darauf hingewiesen, dass das hier vorgestellte Ausführungsbeispiel nur eine von zahllosen möglichen Ausführungen darstellt. Der Schutzbereich der hier vorliegenden Patentanmeldung wird lediglich durch die Patentansprüche bestimmt, während das Ausführungsbeispiel nur zur Verdeutlichung einer möglichen Ausführung der Erfindung dienen soll.

### Bezugszeichen

- 1: Nieteinheit
- 2: Nietstempel
- 3: Nietstempelaufnahme
- 4: Luftführungshülse
- 5: Anschlussstutzen
- 6: Längserstreckungsrichtung
- 7: Angriffsrichtung
- 8: Federelement
- 9: erste Spiralfeder
- 10: zweite Spiralfeder
- 11: Halter
- 12: Schraubring
- 13: Halteflansch
- 14: zylindrische Aufnahme
- 15: zylindrischer Körper
- 16: Auskragung
- 17: Biegeachse
- 18: Unterseite
- 19: Dehnungsmesstreifen
- 20: Verstärker
- 21: Flachbiegeteller

## Patentansprüche

1. Verfahren zum Nieten mithilfe eines plastisch verformbaren Kunststoff-Niets, wobei der Kunststoff-Niet vor dem Nieten an einem Bauteil, nämlich an einem Bauteil eines Kraftfahrzeugs, angeordnet ist und der Niet von einem Nietstempel (2) durch Ausüben einer Nietkraft verformt wird und dadurch ein Annietteil am Bauteil festhält,
wobei
der Nietstempel (2) mit einem Nietkraftmesser ausgerüstet ist und die Nietkraft gemessen wird.
***dadurch gekennzeichnet, dass***
eine Vielzahl Nietstempel (2) an einem Werkzeug angeordnet sind und die Nietkraft von zumindest zwei Nietstempeln, bevorzugt von allen Nietstempeln, individuell gemessen wird,
wobei
ein Innenverkleidungsteil eines Kraftfahrzeugs oder ein Außenverkleidungsteil eines Kraftfahrzeugs verarbeitet wird, insbesondere in schon kaschiertem Zustand, und/oder mit schon eingesetztem weiteren Teil, beispielsweise mit einem Lautsprechergitter, einem Türgriff, einem Leuchtmittel und/oder einem Bedienknopf.

2. Verfahren nach Anspruch 1, ***dadurch gekennzeichnet, dass*** mit dem Verfahren ein Niet mit einer Sollbruchstelle gesetzt wird.

3. Verfahren nach Anspruch 2, ***dadurch gekennzeichnet, dass*** der Niet eine zum Aufplatzen vorgesehene Naht in einem Kraftfahrzeug schließt, insbesondere eine Airbagnaht.

4. Verfahren nach einem der vorstehenden Ansprüche, ***dadurch gekennzeichnet, dass*** die Nietkraft protokolliert wird, sodass beispielsweise eine Qualitätssicherung für den gesetzten Niet erfolgt, vor allem für eine Vielzahl von Nieten.

5. Verfahren nach einem der vorstehenden Ansprüche, ***dadurch gekennzeichnet, dass*** eine Nietkraft von weniger als 500 N zugelassen wird, insbesondere von weniger als 300 N, bevorzugt von etwa 200 N.

6. Verfahren nach Anspruch 1, ***dadurch gekennzeichnet, dass*** protokolliert wird, dass eine maximal zulässige Nietkraft nicht überschritten worden ist.

7. Verfahren nach einem der vorstehenden Ansprüche, ***dadurch gekennzeichnet, dass*** der Nietvorgang unterbrochen wird, wenn eine maximal zulässige Nietkraft überschritten worden ist.

8. Verfahren nach einem der vorstehenden Ansprüche, ***dadurch gekennzeichnet, dass*** in einem vorausgehenden Schritt eine maximal zulässige Nietkraft für das Setzen des Niets ermittelt wird.

9. Verfahren nach Anspruch 8, ***dadurch gekennzeichnet, dass*** die maximal zulässige Nietkraft anhand einer optischen Begutachtung einer Gutseite ermittelt wird, indem bei etwaigen Durchdrückungen auf die Gutseite die maximal zulässige Nietkraft herabgesetzt wird.

10. Verfahren nach Anspruch 8 oder 9, ***dadurch gekennzeichnet, dass*** die maximal zulässige Nietkraft anhand einer Begutachtung eines Niets mit Sollbruchstelle ermittelt wird, indem bei Nietbrüchen an der Sollbruchstelle oder bei Vorschädigungen an der Sollbruchstelle die maximal zulässige Nietkraft herabgesetzt wird.

11. Verfahren nach einem der vorstehenden Ansprüche, ***dadurch gekennzeichnet, dass*** die Nietkraft an einem Halter (11) des Nietstempels (2) am Werkzeug gemessen wird.

12. Verfahren nach einem der vorstehenden Ansprüche, ***dadurch gekennzeichnet, dass*** einzelne Nietstempel (2) bezüglich ihrer Längsachse längs verstellt werden, um eine Nietkraftanpassung zu erzielen.

13. Verfahren nach einem der vorstehenden Ansprüche, ***dadurch gekennzeichnet, dass*** verschiedene maximal zulässige Nietkräfte für verschiedene Nietstempel (2) an einem Nietwerkzeug zugelassen werden, beispielsweise zum Setzen verschiedenartig geformter Niete und/oder zum Setzen von Nieten in verschiedene Werkstoffe am Bauteil.

14. Verfahren nach einem der vorstehenden Ansprüche, ***dadurch gekennzeichnet, dass*** das Nieten mit einem Heißnietverfahren erfolgt, insbesondere mit den Schritten (i) zunächst Erhitzen des Niets mittels einer ihn eng umströmenden Gasströmung, (ii) dann Verformen des Niets mit einem von innen beheizten Nietstempel, (iii) daraufhin Beenden der Heizleistung und Einschalten und Aufrechterhalten einer kühlen Gasströmung.

15. Nietanlage, eingerichtet zum Durchführen eines Verfahrens nach einem der vorstehenden Ansprüche, aufweisend ein Nietwerkzeug, und zwar ein Nietwerkzeug mit einem Nietstempel (2) für einen plastisch verformbaren Kunststoff-Niet, eingerichtet zum Durchführen eines Verfahrens nach einem der vorstehenden Ansprüche, wobei das Nietwerkzeug einen Nietkraftmesser zum Messen einer axialen Nietkraft beim Nieten aufweist, **dadurch gekennzeichnet, dass** die Nietanlage zusätzlich zum Nietwerkzeug einen Kraftsensor und einen Controller aufweist,
wobei eine Datenleitung vorgesehen ist, die zu einem Controller führt, sodass der Controller die Nietkraft beim Nieten auswerten kann,
wobei eine Vielzahl Nietstempel (2) an dem Nietwerkzeug angeordnet sind und die Nietanlage dazu eingerichtet ist, die Nietkraft von zumindest zwei Nietstempeln, bevorzugt von allen Nietstempeln, individuell zu messen.

16. Airbagbauteil mit einer Mehrzahl Kunststoff-Niete, ***dadurch gekennzeichnet, dass*** die Kunststoff-Niete mit unterschiedlichen Nietkräften verformt sind.

## Claims

1. Method for riveting by means of a plastically deformable plastic rivet, the plastic rivet being arranged on a component, namely a component of a motor vehicle, before riveting, and the rivet being deformed by a riveting die (2) by application of a riveting force, and thus retaining a part to be riveted on the component,
the riveting die (2) being equipped with a riveting dynamometer and the riveting force being measured,
***characterized in that***
a plurality of riveting dies (2) is arranged on a tool and the riveting force of at least two riveting dies, preferably of all riveting dies, is measured individually,
an inner paneling part of a motor vehicle or an outer paneling part of a motor vehicle being processed, especially in an already laminated state and/or with an additional part already integrated, for instance a loudspeaker grill, a door knob, a lighting means and/or a control button.

2. Method according to Claim 1, ***characterized in that*** with the method, a rivet with a pre-weakened portion is put into place.

3. Method according to Claim 2, ***characterized in that*** the rivet closes a seam predetermined for bursting in a motor vehicle, in particular an airbag seam.

4. Method according to one of the above Claims, ***characterized in that*** the riveting force is recorded so that, for instance, quality control for the positioned rivet takes place, in particular for a plurality of rivets.

5. Method according to one of the above Claims, ***characterized in that*** a riveting force of less than 500 N is permitted, in particular less than 300 N, preferably approximately 200 N.

6. Method according to Claim 1, ***characterized in that*** it is recorded that a maximum permissible riveting force is not exceeded.

7. Method according to one of the above Claims, ***characterized in that*** the riveting process is interrupted if a maximum permissible riveting force has been exceeded.

8. Method according to one of the above Claims, ***characterized in that*** in a previous step, a maximum permissible riveting force for positioning the rivet is determined.

9. Method according to Claim 8, ***characterized in that*** the maximum possible riveting force is determined by optical monitoring of a go-end side, by reducing the maximum permissible riveting force in case of possible surface markings to the good side.

10. Method according to Claim 8 or 9, ***characterized in that*** the maximum permissible riveting force is determined by monitoring a rivet with a pre-weakened portion, by reducing the maximum permissible riveting force in case of rivet breaks in the pre-weakened portion or in case of previous damage in the pre-weakened portion.

11. Method according to one of the above Claims, ***characterized in that*** the riveting force is measured at a support (11) of the riveting die (2) on the tool.

12. Method according to one of the above Claims, ***characterized in that*** individual riveting dies (2) are adjusted in a longitudinal direction along their longitudinal axis so as to achieve a riveting force adjustment.

13. Method according to one of the above Claims, ***characterized in that*** different maximally permissible riveting forces for different riveting dies (2) are permitted on a riveting tool, for instance for positioning rivets with different shapes and/or for positioning rivets in different materials on the component.

14. Method according to one of the above Claims, ***characterized in that*** riveting is performed by means of a hot riveting method, in particular with the following steps: (i) first heating of the rivet by means of a gas flow flowing closely around it, (ii) then forming of the rivet by means of a riveting die heated from the inside, (iii) subsequently termination of the heating process and initializing and maintaining of a cool gas flow.

15. Riveting plant, adapted for performing a method according to one of the above Claims, having a riveting tool, namely a riveting tool with a riveting die (2) for a plastically deformable plastic rivet, adapted for performing a method according to one of the above Claims, the riveting tool having a riveting dynamometer for measuring an axial riveting force during riveting,
**characterized in that**
the riveting plant has a force sensor and a controller in addition to the riveting tool,
a data line being provided which leads to a controller so that the controller can evaluate the riveting force during riveting,
a plurality of riveting dies (2) being arranged on the riveting tool and the riveting plant being adapted to measure the riveting force of at least two riveting dies, preferably of all riveting dies, individually.

16. Airbag component with a plurality of plastic rivets,
***characterized in that*** the plastic rivets are deformed by different riveting forces.

## Revendications

1. Procédé destiné à riveter à l'aide d'un rivet en matière plastique apte à subir une déformation plastique, lors duquel, avant le rivetage, le rivet en matière plastique est placé sur un élément constitutif, à savoir un élément constitutif d'un véhicule automobile et on déforme le rivet avec un poinçon de rivetage (2), par l'exercice d'une force de rivetage et de ce fait une pièce de rivetage reste maintenue sur l'élément constitutif,
le poinçon de rivetage (2) étant équipé d'un dynamomètre de rivetage et la force de rivetage étant mesurée,
**caractérisé en ce**
**qu'**une pluralité de poinçons de rivetage (2) est placée sur un outil et la force de rivetage d'au moins deux poinçons de rivetage, de préférence de tous les poinçons de rivetage est mesurée individuellement,
sachant qu'on usine une pièce d'habillage intérieur d'un véhicule automobile ou une pièce d'habillage extérieur d'un véhicule automobile, notamment dans un état déjà masqué et/ou avec une autre pièce déjà insérée, par exemple avec une grille d'enceinte, une poignée de portière, un moyen d'éclairage et/ou une touche de commande.

2. Procédé selon la revendication 1, **caractérisé en ce qu'**avec le procédé, on place un rivet avec une zone de rupture théorique.

3. Procédé selon la revendication 2, **caractérisé en ce que** le rivet ferme une soudure destinée à éclater dans un véhicule automobile, notamment une soudure d'airbag.

4. Procédé selon l'une quelconque des revendications précédentes, **caractérisé en ce que** la force de rivetage est consignée, de sorte que par exemple il s'effectue une assurance qualité pour le rivet placé, prioritairement pour une pluralité de rivets.

5. Procédé selon l'une quelconque des revendications précédentes, **caractérisé en ce qu'**on admet une force de rivetage inférieure à 500 N, notamment inférieure à 300 N, de préférence à environ 200 N.

6. Procédé selon la revendication 1, **caractérisé en ce qu'**il est consigné qu'une force de rivetage maximale autorisée n'a pas été dépassée.

7. Procédé selon l'une quelconque des revendications précédentes, **caractérisé en ce que** l'opération de rivetage est interrompue si une force de rivetage maximale autorisée a été dépassée.

8. Procédé selon l'une quelconque des revendications précédentes, **caractérisé en ce que** dans une étape préalable, on détermine une force de rivetage maximale autorisée pour le placement du rivet.

9. Procédé selon la revendication 8, **caractérisé en ce que** la force de rivetage maximale autorisée est déterminée par une expertise visuelle d'une face visible, sachant que dans le cas d'éventuels enfoncements de la face visible, on diminue la force de rivetage maximale autorisée.

10. Procédé selon la revendication 8 ou 9, **caractérisé en ce qu'**on détermine la force de rivetage maximale autorisée par une expertise d'un rivet doté d'une zone de rupture théorique, **en ce que** dans le cas de ruptures du rivet sur la zone de rupture théorique ou dans le cas de prédétériorations sur la zone de rupture théorique, on diminue la force de rivetage maximale autorisée.

11. Procédé selon l'une quelconque des revendications précédentes, **caractérisé en ce qu'**on mesure la force de rivetage sur un support (11) du poinçon de rivetage (2) sur l'outil.

12. Procédé selon l'une quelconque des revendications précédentes, **caractérisé en ce qu'**on ajuste longitudinalement des poinçons de rivetage (2) individuels au niveau de leur axe longitudinal, pour obtenir une adaptation de la force de rivetage.

13. Procédé selon l'une quelconque des revendications précédentes, **caractérisé en ce que** différentes forces de rivetage maximales autorisées sont autorisées pour différents poinçons de rivetage (2) sur un outil de rivetage, par exemple pour le placement de rivets de différentes formes et/ou pour le placement de rivets dans différents matériaux sur l'élément constitutif.

14. Procédé selon l'une quelconque des revendications précédentes, **caractérisé en ce que** le rivetage s'effectue par procédé de thermorivetage, notamment comportant les étapes (i) d'abord de la mise en température du rivet par flux gazeux qui l'enveloppe étroitement, (ii) ensuite de la déformation du rivet à l'aide d'un poinçon de rivetage chauffé par l'intérieur, (iii) puis de la coupure de la puissance de chauffage et de l'introduction et du maintien d'un flux gazeux frais.

15. Installation de rivetage aménagée pour réaliser un procédé selon l'une quelconque des revendications précédentes, comportant un outil de rivetage, à savoir un outil de rivetage doté d'un poinçon de rivetage (2) pour un rivet en matière plastique, apte à subir une déformation plastique, aménagé pour réaliser un procédé selon l'une quelconque des revendications précédentes, l'outil de rivetage comportant un dynamomètre de rivetage destiné à mesurer une force de rivetage axiale lors du rivetage,
**caractérisé en ce qu'**en plus de l'outil de rivetage, l'installation de rivetage comporte un capteur de force et un contrôleur,
sachant qu'il est prévu une ligne de données qui mène vers un contrôleur, de sorte que le contrôleur puisse évaluer la force de rivetage lors du rivetage,
une pluralité de poinçons de rivetage (2) étant placée sur l'outil de rivetage et l'installation de rivetage étant aménagée pour mesurer individuellement la force de rivetage d'au moins deux poinçons de rivetage, de préférence de tous les poinçons de rivetage.

16. Élément constitutif d'airbag, doté d'une pluralité de rivets en matière plastique, **caractérisé en ce que** les rivets en matière plastique sont déformés avec différentes forces de rivetage.
